# EUROPEAN PATENT SPECIFICATION

(11) **EP 1 246 342 B1**
(45) Date of publication and mention of the grant of the patent: **29.10.2014**
(21) Application number: 02007041.3
(22) Date of filing: 27.03.2002
(51) Int. Cl.: H02K 1/18

(54) **Magnetic core apparatus**
Magnetkernvorrichtung
Dispositif à noyau magnétique

(30) Priority: 27.03.2001 JP 2001089114
(43) Date of publication of application: 02.10.2002
(73) Proprietor: MITSUBISHI DENKI KABUSHIKI KAISHA, Chiyoda-ku Tokyo 100-8310 (JP)
(72) Inventor: Miyake, Nobuaki, Chiyoda-ku Tokyo 100-8310 (JP); Nakahara, Yuji, Chiyoda-ku Tokyo 100-8310 (JP); Hashiguchi, Naoki, Chiyoda-ku Tokyo 100-8310 (JP); Kajita, Naoki, Chiyoda-ku Tokyo 100-8310 (JP); Daikoku, Akihiro, Chiyoda-ku Tokyo 100-8310 (JP)
(74) Representative: Popp, Eugen

(56) References cited:
- GB-A- 461 068
- US-A- 3 534 205
- US-A- 5 729 072
- US-B1- 6 369 687

## Description

### Background of the Invention

### 1. Field of the Invention

This invention relates to a magnetic core apparatus in which plate-shaped core pieces formed by punching with a press are stacked and are secured to form a single body by caulking or punch-pressing, and ends are connected to each other to form a ring which is secured to the inner peripheral surface of an annular frame by shrink fitting so as to form a single body.

### 2. Description of the Related Art

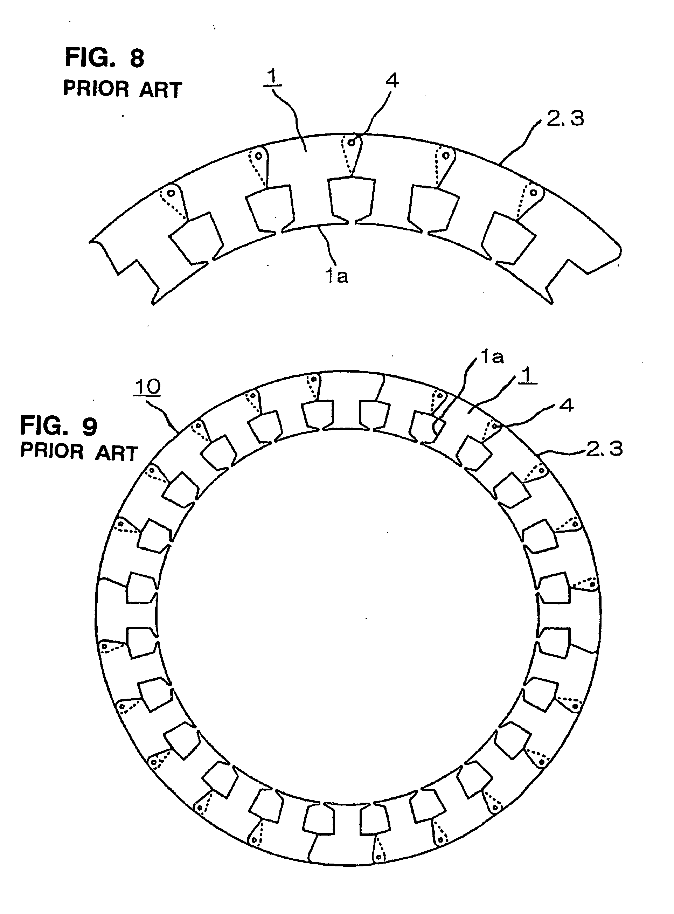

Figure 8 shows an example of this type of conventional magnetic core 10, which is disclosed in Japanese Published Unexamined Patent Application No. 2000-201458, for example. As shown in this figure, a plate-shaped core piece 1 of a magnetic material has a magnetic pole tooth 1a projecting from one side. A first core member 2 comprises a plurality of the core pieces 1 arranged in the shape of a strip, and a second core member 3 comprises a plurality of the core pieces 1 arranged in the form of a strip and facing in the opposite direction from the core pieces 1 in the first core member 2. The core members 2 and 3 are alternatingly stacked with the ends of adjoining core pieces 1 in the stacking direction overlapping each other, and the core pieces 1 are secured to each other by caulking or puch-pressing to form a single body.

A connecting portion 4 is provided at one end of each core piece 1. Adjoining ends can pivot with respect to each other by means of the connecting portions 4. Although not shown in the drawings, the core members 2 and 3 are deformed into a linear shape by pivoting about the connecting portions 4 and winding is carried out, after which pivoting about the connecting portions 4 is again performed to return to the state shown in Figure 8. Then, a plurality of core members, such as four of each of the first and second core members 2 and 3 in the example shown in Figure 9, are combined to form an annular shape. Then, as described in Japanese Published Unexamined Patent Application 9-191588, for example, and as shown in Figures 10 and 11, a core 10 which is constructed in this manner is secured to the inner peripheral surface of a frame 5 by shrink fitting to form a single body and obtain a magnetic core apparatus 100.

In a conventional magnetic core apparatus 100 which is constituted as described above, the core 10 is secured to the inner peripheral surface of the frame 5 by shrink fitting to form a single body. At the time of shrink fitting, a force which is generated due to shrinkage of the frame 5 acts on the outer peripheral surface of the core 10. Each core piece 1 receives a compressive force from the outer periphery and tries to move in the circumferential direction. However, the end surfaces of adjoining core pieces 1 in the circumferential direction contact each other and prevent movement in the circumferential direction, so the core pieces 1 try to move out of their plane, i.e., in the stacking direction. As a result, the caulked portions or the punch-pressed portions become detached and the core pieces 1 separate from each other, so there was the problem that the ease of assembly was reduced due to the time required for repairs.

EP 0 969 581 is considered to be the closest prior art, and discloses a method according to the preamble of claim 1.

### Summary of the Invention

This invention was made in order to solve such problems. Its object is to provide a magnetic core apparatus which can prevent the caulked portions from becoming detached at the time of shrink fitting and prevent the core pieces from separating from each other and which makes it possible to achieve an improvement in the ease of assembly.

The present invention provides a method in accordance with independent claim 1, Further preferred embodiments are given in the dependent claims.

The claimed invention can be better understood in view of the embodiments described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawings" as well as the "Description of Preferred Embodiments."

### Brief Description of the Drawings

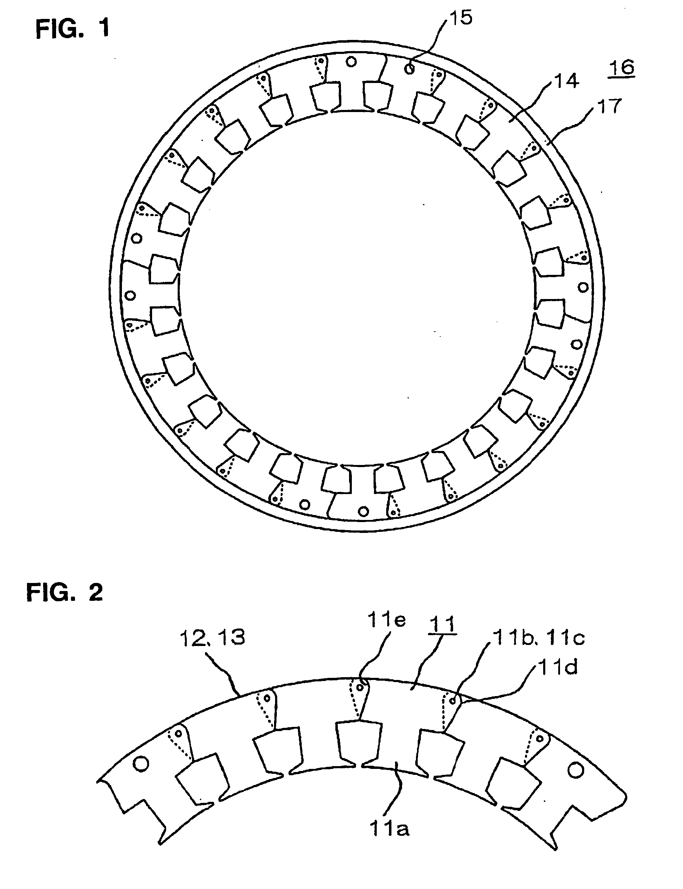

Figure 1 is a front view showing the structure of a magnetic core apparatus according to a first embodiment of this invention.
Figure 2 is a plan view showing the structure of a core member of Figure 1.

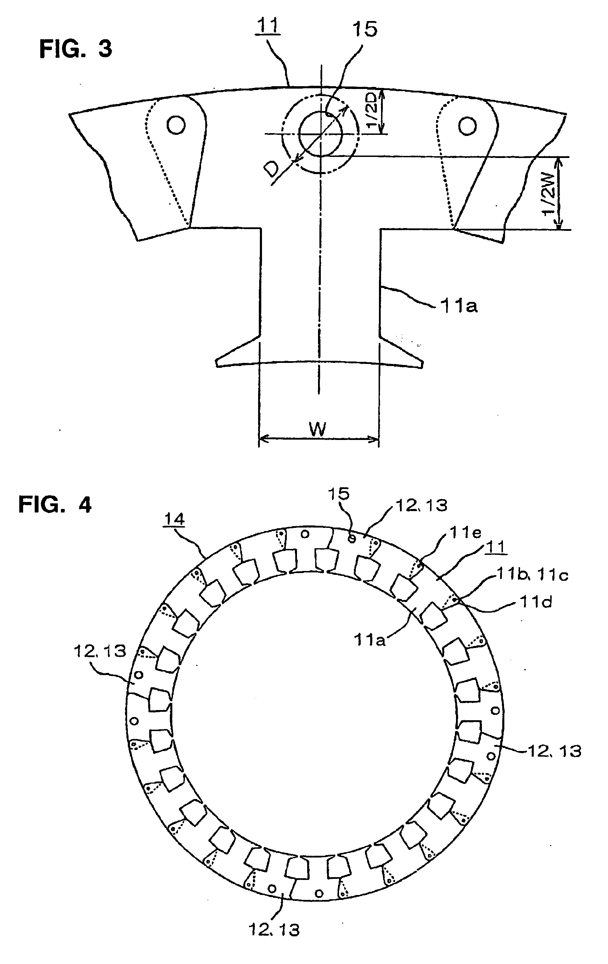

Figure 3 is a plan view showing in detail the position of a fastening hole in Figure 2.
Figure 4 is a front view showing the structure of the core in Figure 1.

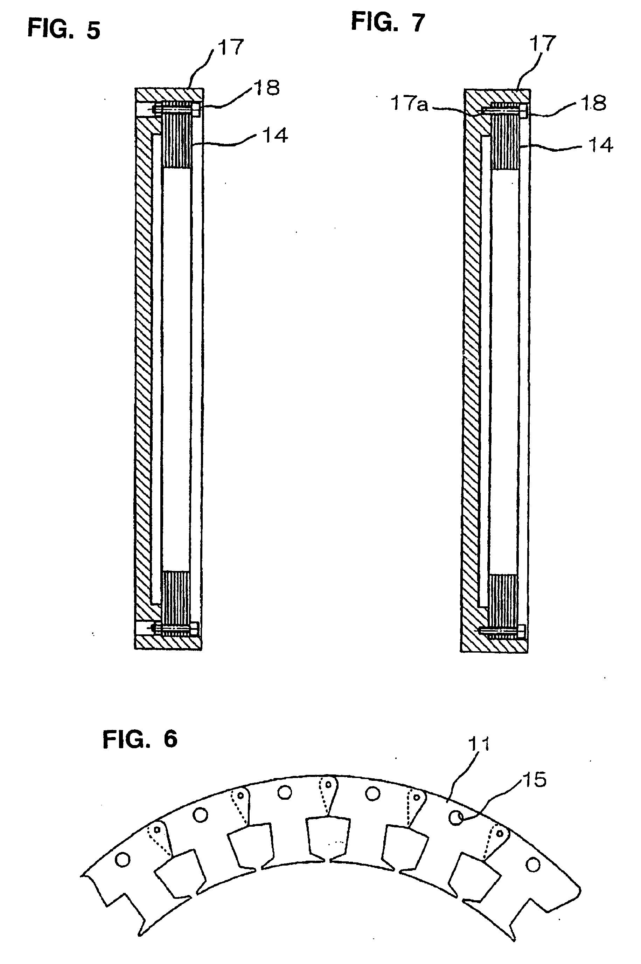

Figure 5 is a cross-sectional view showing the state in which the core of Figure 4 is secured to a frame by shrink fitting to form a single body.
Figure 6 is a plan view showing the structure of a core member of a core apparatus according to the first embodiment having a different structure from in Figure 2.
Figure 7 is a cross-sectional view showing a different state from in Figure 5 in which the core of Figure 4 is secured to a frame by shrink fitting to form a single body.
Figure 8 is a plan view showing the structure of a core member of a conventional core apparatus.
Figure 9 is a front view showing the structure of the core of a conventional core apparatus.

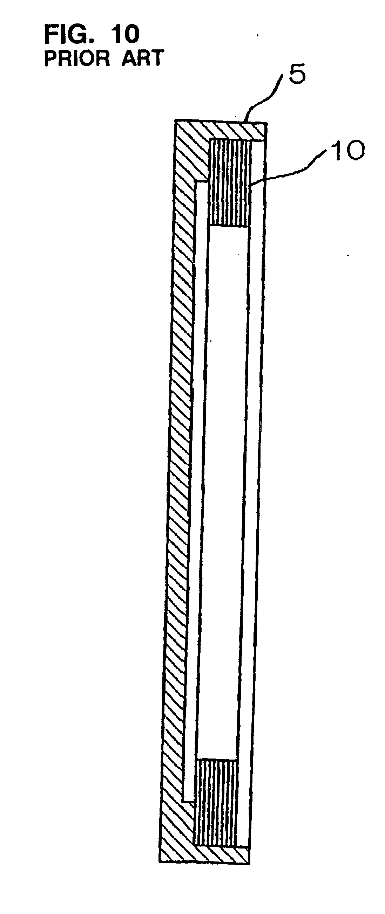

Figure 10 is a cross-sectional view showing the state in which the core of Figure 9 is secured to a frame by shrink fitting to form a single body.

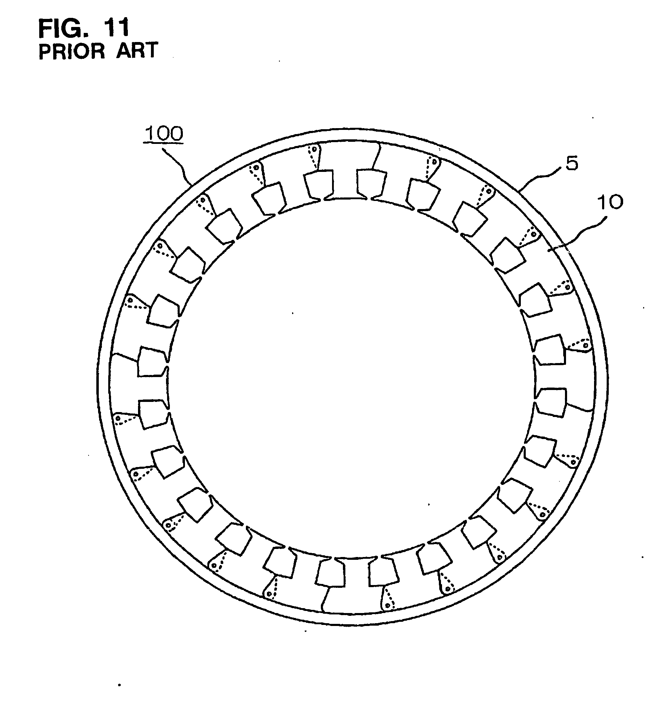

Figure 11 is a front view showing the structure of a conventional core apparatus.

### Description of Preferred Embodiments

Below, embodiments of this invention will be described based on the drawings.

### First Embodiment

Figure 1 is a front view showing the structure of a magnetic core apparatus according to a first embodiment of this invention, Figure 2 is a plan view showing a core member of Figure 1, Figure 3 is a plan view showing the details of the location of the fastening holes in Figure 2, Figure 4 is a front view showing the structure of the core of Figure 1, Figure 5 is a cross-sectional view showing the state in which the core of Figure 4 is secured to the frame by shrink fitting to form a single body, Figure 6 is a plan view showing a core member of the core apparatus according to the first embodiment of this invention having a different structure from in Figure 2, and Figure 7 is a cross-sectional view of the core of Figure 4 secured to a frame to form a single body by shrink fitting in a different state from in Figure 5.

In the figures, as shown in Figure 2, 11 is a plate-shaped core piece made of a magnetic material. A magnetic pole tooth 11a projects from one side thereof, and a connecting portion in the form of a recess 11 b and a projection 11c are formed on the rear and front surfaces of one end. A first end surface 11d is formed at one end in the shape of a circular arc centered on the recess and projection 11b and 11c. At the other end is formed a second end surface 11e which can mate with the first end surface 11d of an adjoining core piece 11. 12 is a first core member in which a plurality of core pieces 11 formed in this manner are connected into a strip by mating of the end surfaces 11d and 11e.

13 is a second core member in which each core piece 11 is arranged oppositely in the lengthwise direction from in the first core member 12. It is alternatingly stacked with the first core member 12 and formed into a single body with it by caulking. The recesses and projections 11b and 11c of adjoining core pieces 11 in the stacking direction mate with each other, whereby they can freely rotate with respect to each other. 14 is a core comprising a plurality of the first core members 12 and second core members 13 stacked on each other. The core members 12 and 13 are deformed into a linear shape by pivoting of the core pieces 11 about the recesses and projections 11b and 11c, winding (not shown) is carried out in this state, and the core members 12 and 13 are returned to the shape shown in Figure 2. Then, a plurality of the core members 12 and 13, such as four of each of the first and second core members 12 and 13, are formed into an annulus as shown in Figure 4 to obtain a core. The end portions of opposing core pieces 11 overlap each other in the connecting direction through the recesses and projections 11b and 11c.

15 is a fastening hole formed in the core piece 11 at each end of each of the core members 12, 13 of the core 14 and passing through the core piece 11 in the stacking direction. As shown in Figure 3, it is formed on the centerline of the magnetic pole tooth 11a, and it is spaced from one side of the core piece 11, i.e., from the inner side from which the magnetic pole tooth 11a projects by a distance of at least 1/2 the width W of the magnetic pole tooth 11a. In addition, it is formed with a prescribed diameter such that the center of the hole 15 is spaced inwardly from the outer periphery of the core piece 11 by at least 1/2 of the outer diameter D of the head of a securing bolt, to be described below, passing through the fastening hole 15 in the stacking direction.

16 is a core apparatus comprising the core 14 and an annular frame 17 on the inner side of which the core 14 is fit to form a single body. As shown in Figure 5, a bolt 18 is passed through each fastening hole 15 of the core 14, the core pieces 11 are fastened and secured in the stacking direction, and after the core 14 is fit inside the frame 17 which has been previously expanded by heating, the frame 17 is cooled and contracts to clamp the outer peripheral surface of the core 14 with the inner peripheral surface of the frame 17. Namely, the core 14 is secured to the frame 17 to form a single body by a shrink fit. The bolts 18 are subsequently suitably removed.

In this manner, according to the above-described first embodiment, fastening holes 15 which pass through the core pieces 11 in the stacking direction are provided at prescribed locations in the circumferential direction of the core 14, and after the core pieces 11 are secured to each other in the stacking direction by bolts 18 passing through the fastening holes 15, the core 14 is fit on the interior of the frame 17 and shrink fitting is performed. Therefore, even if the frame 17 applies a compressive force to the core pieces 11 from their outer periphery, the core pieces 11 are prevented by the clamping force of the bolts 18 from moving in the stacking direction, so caulked portions are prevented from coming loose and the core pieces 11 are prevented from separating. Therefore, it is not necessary to perform repairs, and the ease of assembly can be increased.

Each fastening hole 15 is approximately on the centerline of a magnetic pole tooth 11a, and it is formed in a location spaced outwards from the inner side of the core piece 11 on which the magnetic pole tooth 11a is formed by at least 1/2 the width W of the magnetic pole tooth 11a. Therefore, the fastening hole 15 does not interfere with the magnetic path, and a decrease in magnetic performance can be prevented. For example, in a concentrated winding, in general, in a magnetic pole tooth in which the magnetic flux density is high, the magnetic flux passing through it is distributed between the two adjoining magnetic pole teeth. Namely, the flux passing through the magnetic pole tooth and returning to the core back is divided at the base of the magnetic pole tooth with 1/2 to the left and 1/2 to the right. Therefore, if the width of the core back is made at least 1/2 of the width of the magnetic pole tooth, magnetic saturation of the core back can be prevented.

Furthermore, the center of the fastening hole 15 is spaced inwards from the other side of the core piece 11, i.e., from the outer periphery by at least 1/2 of the outer diameter D of the head of the bolt 18. Therefore, a commercially available bolt 18 can be used as a fastening member, and the fastening operation can be easily carried out, so the ease of assembly can be further increased.

In the above-described arrangement, a fastening hole 15 passes through the core piece 11 at each end of a core member in the state shown in Figure 2. However, as shown in Figure 6, a fastening hole 15 can be formed in each of the core pieces 11, whereby fastening can be performed with greater certainty, and the ease of assembly can be further improved.

Furthermore, in the above-described arrangement, after each core piece 11 is secured by a bolt 18 and a nut, the core 14 is fit inside a frame 17. However, as shown in Figure 7, the core 14 may be secured by threading bolts 18 into screw holes 17a formed in the frame 17 after the core 14 is fit in the frame 17. This arrangement of course provides the same benefits as the preceding arrangement.

As described above, according to this invention, a magnetic core apparatus is one in which a plurality of core pieces have their ends connected to each other to form the shape of a ring, each core piece is formed by punching with a press and has a magnetic pole tooth which projects nearly perpendicularly to the direction of connecting and a connecting portion which is formed on one of the ends, a first core member having the cores arranged in the shape of a strip and a second core member having the core pieces arranged in the shape of a strip in the opposite direction from the direction of connection of the first core member are stacked such that the ends of adjoining core pieces in the stacking direction overlap each other, adjoining core pieces in the stacking direction are secured to each other by caulking or punch-pressing to form a single body and the connecting portions are connected so as to be able to freely pivot, and the core members are formed into the ring shape with the magnetic pole teeth on the interior to form a core, which is secured by shrink fitting to the inner peripheral surface of an annular frame so as to form a single body, wherein a plurality of fastening holes which pass through the core pieces in the stacking direction are provided at prescribed positions in the circumferential direction of the core. Therefore, a core apparatus can be provided which makes it possible to increase the ease of assembly.

According to this invention, each fastening hole is formed on approximately the centerline of one of the magnetic pole teeth at a position such that it is spaced outwards from the inner side of the core piece by at least 1/2 the width of the magnetic pole tooth. Therefore, a magnetic core apparatus can be provided which can prevent a decrease in magnetic performance.

## Claims

1. A method of manufacturing a magnetic core apparatus (16) in which a plurality of core pieces (11) have their ends connected to each other to form the shape of a ring,
each core piece (11) is formed by punching with a press and has a magnetic pole tooth (11a) which projects nearly perpendicularly to the direction of connecting and a connecting portion which is formed on one of the ends, a first core member (12) having the cores arranged in the shape of a strip and a second core member (13) having the core pieces arranged in the shape of a strip in the opposite direction from the direction of connection of the first core member are stacked such that the ends of adjoining core pieces (11) in the stacking direction overlap each other, adjoining core pieces (11) in the stacking direction are secured to each other by caulking to form a single body and the connecting portions are connected so as to be able to freely pivot, and the core members (12, 13) are formed into the ring shape with the magnetic pole teeth (11a) on the interior to form a core (14),
**characterized by**
providing a plurality of fastening holes (15), which pass through the core pieces (11) in the stacking direction which are provided at prescribed positions in the circumferential direction of the core (14), passing a bolt (18) through each fastening hole (15), placing the core (14) inside a frame (17) which is expanded by heating and allowing the frame (17) to cool, thus securing the core (14) by shrink fitting to the inner peripheral surface of the annular frame (17) so as to form a single body.

2. A method as claimed in claim 1, further comprising:
securing the core (14) to the frame (17) by engaging the bolts (18) with associated screw holes (17a) in the frame (17).

3. A method as claimed in claim 1 **characterized by** forming each fastening hole with a prescribed diameter at a position such that its center is spaced inwards from the outside of the core piece by at least ½ the outer diameter of the head of a bolt.

4. A method as claimed in claim 1 **characterized by** forming each fastening hole on approximately the centerline of one of the magnetic pole teeth at a position such that it is spaced outwards from the inner side of the core piece by at least ½ the width of the magnetic pole tooth.

## Patentansprüche

1. Verfahren zum Herstellen einer Magnetkernvorrichtung (16), mit einer Mehrzahl von Kernabschnitten (11), deren Enden miteinander verbunden sind, um die Form eines Ringes auszubilden,
wobei jeder Kernabschnitt (11) durch Stanzen mit einer Presse ausgebildet ist und einen Magnetpolzahn (11a), welcher nahezu senkrecht zur Verbindungsrichtung vorragt, und einen Verbindungsabschnitt, welcher an einem der Enden ausgebildet ist, umfasst, wobei ein erstes Kernelement (12), dessen Kerne in der Form eines Streifens angeordnet sind, und ein zweites Kernelement (13), dessen Kernabschnitte in der Form eines Streifens angeordnet sind, und zwar in der entgegengesetzten Richtung zur Verbindungsrichtung des ersten Kernelements, derart gestapelt sind, dass sich die Enden von angrenzenden Kernabschnitten (11) in der Stapelrichtung überlappen, wobei angrenzende Kernabschnitte (11) in der Stapelrichtung durch Stemmen miteinander verbunden sind, um einen einzelnen Körper auszubilden, und wobei die Verbindungsabschnitte derart verbunden sind, dass sie dazu in der Lage sind, frei zu schwenken, und wobei die Kernelemente (12, 13) zu der Form eines Rings ausgebildet sind, wobei die Magnetpolzähne (11a) an der Innenseite sind, um einen Kern (14) auszubilden,
**gekennzeichnet durch**:
Bereitstellen von einer Mehrzahl von Befestigungslöchern (15), welche **durch** die Kernabschnitte (11) in der Stapelrichtung durchlaufen, welche an vorgeschriebenen Positionen in der Umfangsrichtung von dem Kern (14) bereitgestellt sind, Durchführen eines Bolzens (18) **durch** jedes Befestigungsloch (15), Platzieren des Kerns (14) innerhalb eines Rahmens (17), welcher **durch** Erwärmung erweitert ist, und Kühlen des Rahmens (17), wodurch der Kern (14) **durch** Schrumpfpassung an der Innenumfangsfläche von dem ringförmigen Rahmen (17) befestigt wird, um somit einen einzelnen Körper auszubilden.

2. Verfahren nach Anspruch 1, ferner umfassend:
Befestigen des Kerns (14) an dem Rahmen (17) durch Ineingriffnahme der Bolzen (18) mit zugehörigen Schraublöchern (17a) in dem Rahmen (17).

3. Verfahren nach Anspruch 1, **gekennzeichnet durch** ein Ausbilden von jedem Befestigungsloch mit einem vorgeschriebenen Durchmesser an einer derartigen Position, dass dessen Mitte nach innen gerichtet von der Außenseite von dem Kernabschnitt um zumindest 1/2 des Außendurchmessers von dem Kopf eines Bolzens beabstandet ist.

4. Verfahren nach Anspruch 1, **gekennzeichnet durch** ein Ausbilden von jedem Befestigungsloch an ungefähr der Mittenlinie von einem der Magnetpolzähne an einer derartigen Position, dass es nach außen gerichtet von der Innenseite von dem Kernabschnitt um zumindest 1/2 von der Breite von dem Magnetpolzahn beabstandet ist.

## Revendications

1. Procédé pour fabriquer un dispositif à noyau magnétique (16) dans lequel une pluralité de pièces de noyau (11) ont leurs extrémités raccordées entre elles afin de former la forme d'un anneau,
chaque pièce de noyau (11) est formée par poinçonnage avec une presse et a une dent de pôle magnétique (11a) qui fait saillie presque perpendiculairement à la direction de raccordement et une partie de raccordement qui est formée sur l'une des extrémités, un premier élément de noyau (12) ayant les noyaux agencés sous la forme d'une bande et un second élément de noyau (13) ayant les pièces de noyau agencées sous la forme d'une bande dans la direction opposée à la direction de raccordement du premier élément de noyau, sont empilés de sorte que les extrémités des pièces de noyau (11) attenantes dans la direction d'empilement se chevauchent, les pièces de noyau (11) attenantes dans la direction d'empilement sont fixées entre elles par matage afin de former un seul corps et les parties de raccordement sont raccordées afin de pouvoir pivoter librement, et les éléments de noyau (12, 13) sont formés sous la forme d'un anneau avec les dents de pôle magnétique (11a) sur l'intérieur afin de former un noyau (14),
**caractérisé par** l'étape consistant à
pratiquer une pluralité de trous de fixation (15) qui passent à travers les pièces de noyau (11) dans la direction d'empilement, qui sont prévus dans des positions prédéterminées dans la direction circonférentielle du noyau (14) en faisant passer un boulon (18) à travers chaque trou de fixation (15), placer le noyau (14) à l'intérieur d'un châssis (17) qui est expansé par chauffage et permettre au châssis (17) de refroidir, fixant ainsi le noyau (14) par ajustage par contraction, à la surface périphérique interne du châssis annulaire (17) afin de former un seul corps.

2. Procédé selon la revendication 1, comprenant en outre l'étape consistant à :
fixer le noyau (14) sur le châssis (17) en mettant en prise les boulons (18) avec les trous de vis (17a) associés dans le châssis (17).

3. Procédé selon la revendication 1, **caractérisé par** l'étape consistant à former chaque trou de fixation avec un diamètre prédéterminé dans une position de sorte que son centre est espacé vers l'intérieur de l'extérieur de la pièce de noyau d'au moins 1/2 du diamètre externe de la tête d'un boulon.

4. Procédé selon la revendication 1, **caractérisé par** l'étape consistant à former chaque trou de fixation approximativement sur l'axe central de l'une des dents de pôle magnétique dans une position de sorte qu'il est espacé vers l'extérieur à partir du côté interne de la pièce de noyau d' au moins 1/2 de la largeur de la dent de pôle magnétique.
